# EUROPÄISCHE PATENTSCHRIFT

(11) **EP 3 097 376 B1**
(45) Veröffentlichungstag und Bekanntmachung des Hinweises auf die Patenterteilung: **26.09.2018**
(21) Anmeldenummer: 15721598.9
(22) Anmeldetag: 23.04.2015
(51) Int. Cl.: F28D 20/00, F28F 21/04

(54) **WÄRMESPEICHER**
HEAT ACCUMULATOR
ACCUMULATEUR DE CHALEUR

(30) Priorität: 06.05.2014 DE 102014208454
(43) Veröffentlichungstag der Anmeldung: 30.11.2016
(73) Patentinhaber: Siemens Aktiengesellschaft, 80333 München (DE)
(72) Erfinder: DANOV, Vladimir, 91056 Erlangen (DE); PAPADOPOULOS, Theodoros, 80333 München (DE)
(86) Internationale Anmeldenummer: PCT/EP2015/058785
(87) Internationale Veröffentlichungsnummer: WO 2015/169609

(56) Entgegenhaltungen:
- WO-A2-2012/020233
- DE-A1-102011 000 655
- JP-A- S58 175 792

## Beschreibung

Die Erfindung betrifft einen Wärmespeicher gemäß dem Oberbegriff des Patentanspruches 1.

Wärmespeicher sind thermische Energiespeicher, die thermische Energie (Wärme) speichern und somit eine Erzeugung von elektrischer Energie von einer Erzeugung oder Bereitstellung der thermischen Energie zeitlich entkoppeln. Die mittels des Wärmespeichers gespeicherte thermische Energie kann anschließend als Wärme direkt zum Verbraucher geführt oder wieder zur Erzeugung elektrischer Energie verwendet werden.

Ein möglicher Wärmespeicher ist ein Schüttgutspeicher, der als Schüttgut Steine oder Ziegel umfasst. Hierbei wird der Schüttgutspeicher typischerweise mittels eines etwa 600 °C warmen Fluids beladen.

Aus der DE 10 2011 000655 A1 ist ein Wärmespeicher gemäss dem Oberbegriff des Anspruches 1 mit einer Mehrzahl von steinartigen Elementen als Wärmespeichermaterial bekannt. Der bekannte Wärmespeicher weist zwei Öffnungen zum Beladen oder Enladen auf. Weiterhin weist das Wärmespeichermaterial in einem unteren Teilbereich einen größeren mittleren Durchmesser als in einem oberen Teilbereich des Wärmespeichers auf.

Der Stand der Technik unterscheidet vertikal und horizontal ausgerichtete Wärmespeicher. Insbesondere liegt in einem horizontalen Wärmespeicher, im Gegensatz zu einem vertikalen Wärmespeicher, eine vertikale Temperaturfront vor. Beim Beladen oder Entladen des horizontalen Wärmespeichers werden die genannten vertikalen Temperaturfronten aufgrund der natürlichen Konvektion, die in horizontaler Richtung erfolgt, verzerrt, so dass bezüglich der Temperatur eine ungleichmäßige Beladung oder Entladung des Wärmespeichers erfolgt. Hierdurch wird die Effizienz horizontaler Wärmespeicher eingeschränkt.

Nach dem Stand der Technik wird versucht, mittels horizontaler und/oder vertikaler Platten, die innerhalb des horizontalen Wärmespeichers angeordnet sind, die natürliche Konvektion zu behindert. Allerdings ist hierfür typischerweise eine hohe Anzahl von Platten notwendig. Bei vertikal angeordneten Platten werden zusätzlich die Druckverluste beim Beladen oder Entladen des horizontalen Wärmespeichers erhöht.

Der vorliegenden Erfindung liegt folglich die Aufgabe zugrunde einen horizontalen Wärmespeicher zu verbessern.

Die Aufgabe wird durch einen Wärmespeicher mit den Merkmalen des unabhängigen Patentanspruches 1 und durch ein Verfahren zum Betrieb eines Wärmespeichers mit den Merkmalen des unabhängigen Patentanspruches 10 gelöst. In den abhängigen Patentansprüchen sind vorteilhafte Ausgestaltungen und Weiterbildungen der Erfindung angegeben.

Der erfindungsgemäße Wärmespeicher zur Speicherung thermischer Energie umfasst einen Behälter mit einer sich horizontal erstreckenden Längsachse, wobei der Behälter ein aus einer Mehrzahl von steinartigen Elementen gebildetes Wärmespeichermaterial umfasst und der Behälter in einem ersten Teilbereich eine erste Öffnung und in einem zweiten Teilbereich eine gegenüber der ersten Öffnung vertikal versetzte zweite Öffnung aufweist, wobei ein mittlerer Durchmesser der im ersten Teilbereich angeordneten steinartigen Elemente größer als ein mittlerer Durchmesser der im zweiten Teilbereich angeordneten steinartigen Elemente ist.

Durch die sich horizontal erstreckende Längsachse wird ein horizontal ausgerichteter beziehungsweise ein horizontaler Wärmespeicher ausgebildet.

Unter dem mittleren Durchmesser der steinartigen Elemente ist beispielsweise ein über die steinartigen Elemente gemittelter Durchmesser einer minimalen oder maximalen Ausdehnung der steinartigen Elemente anzusehen. Auch kann hierdurch ein größeres mittleres Aspektverhältnis der im ersten Teilbereich angeordneten steinartigen Elemente gegenüber den im zweiten Teilbereich angeordneten steinartigen Elementen vorgesehen sein. Ein einzelnes Aspektverhältnis bezeichnet das Verhältnis von maximaler Ausdehnung zu minimaler Ausdehnung eines steinartigen Elementes. Das mittlere Aspektverhältnis bezeichnet wiederum eine Mittelung der einzelnen Aspektverhältnisse.

Im ersten Teilbereich des Behälters weisen die darin angeordneten steinartigen Elemente erfindungsgemäß einen größeren mittleren Durchmesser als die im zweiten Teilbereich angeordneten steinartigen Elemente auf. Hierbei bildet der zweite Teilbereich des Behälters, der die steinartigen Elemente mit dem kleineren mittleren Durchmesser umfasst, den eigentlichen Teilbereich des Wärmespeichers zum Speichern der thermischen Energie aus. Hierbei ist erfindungsgemäß der erste Teilbereich zur horizontalen gleichmäßigen Verteilung eines ein- oder ausströmenden Fluids vorgesehen. Die Verteilung des Fluids erfolgt erfindungsgemäß durch die im ersten Teilbereich angeordneten vergrößerten steinartigen Elemente, die im Mittel einen größeren Durchmesser aufweisen als die im zweiten Teilbereich angeordneten steinartigen Elemente. Vorteilhafterweise erfolgt hierdurch die Verteilung mit einem möglichst geringen Druckverlust. Nach der gleichmäßigen Verteilung des Fluides mittels des ersten Teilbereiches strömt das Fluid von dem ersten Teilbereich in den zweiten Teilbereich. Hieraus ergibt sich ein annähernd vertikaler Strömungsverlauf des Fluids, so dass sich erfindungsgemäß eine annähernd horizontale Temperaturfront innerhalb des Wärmespeichers beziehungsweise des Behälters einstellt.

Mit anderen Worten wird durch den erfindungsgemäßen Wärmespeicher eine horizontale Temperaturfront in einem horizontalen Wärmespeicher ermöglicht. Der erfindungsgemäße horizontale Wärmespeicher ermöglicht es folglich den Vorteil vertikaler Wärmespeicher - die horizontale Temperaturfront - auf horizontal ausgerichtete Wärmespeicher zu übertragen. Folglich wird durch eine natürliche Konvektion, die nun in zur horizontalen Temperaturfront senkrechter Richtung (vertikale Richtung) erfolgt, die Temperaturfront des erfindungsgemäßen horizontalen Wärmespeichers beim Beladen, Entladen und/oder in Ruhephasen nicht verzerrt. Dadurch wird die Effizienz des erfindungsgemäßen Wärmespeichers verbessert.

Durch den erfindungsgemäßen vertikalen Versatz der ersten und zweiten Öffnung werden Temperaturgradienten innerhalb des Wärmespeichers verringert. Bevorzugt ist der vertikale Abstand der ersten Öffnung zum Boden des Behälters kleiner als der vertikale Abstand der zweiten Öffnung zum Boden des Behälters. Weiterhin ist ein kleinerer vertikaler Abstand der zweiten Öffnung zur Decke des Behälters gegenüber einem vertikalen Abstand der ersten Öffnung zur Decke des Behälters vorgesehen. Mit anderen Worten ist die erste Öffnung in der Nähe des Bodens des Behälters und die zweite Öffnung in der Nähe der Decke des Behälters angeordnet. Hierdurch weisen die erste und die zweite Öffnung den gegenseitigen vertikalen Versatz auf. Zweckmäßigerweise ist die Temperatur eines durch die erste Öffnung ein- oder ausströmenden Fluids kleiner als die Temperatur eines durch die zweite Öffnung ein- oder ausströmenden Fluids.

Beim Verfahren zum Betrieb eines erfindungsgemäßen Wärmespeichers wird ein Fluid mittels der ersten oder zweiten Öffnung in den Behälter des Wärmespeichers eingeströmt und in thermischen Kontakt mit dem Wärmespeichermaterial gebracht, wobei zum Entladen des Wärmespeichers das Fluid durch die erste Öffnung eingeströmt und durch die zweite Öffnung ausgeströmt wird und/oder zum Beladen des Wärmespeichers das Fluid durch die zweite Öffnung eingeströmt und durch die erste Öffnung ausgeströmt wird.

Zum Entladen wird ein kaltes Fluid mittels der ersten Öffnung, die im ersten Teilbereich angeordnet ist, in den Behälter des Wärmespeichers eingeströmt und ein warmes Fluid mittels der zweiten Öffnung, die im zweiten Teilbereich des Behälters angeordnet ist, ausgeströmt. Hierbei ist der erste Teilbereich in der Nähe des Bodens und der zweite Teilbereich in der Nähe der Decke des Behälters angeordnet. Das kalte Fluid weist hierbei eine Temperatur auf, die kleiner als die Temperatur des Wärmespeichermaterials ist. Das warme Fluid weist eine größere Temperatur als das Wärmespeichermaterial auf. Mit anderen Worten wird beim Entladen die im Wärmespeicher beziehungsweise im Wärmespeichermaterial gespeicherte Wärme durch den thermischen Kontakt vom Wärmespeichermaterial auf das Fluid übertragen. Vorgesehen ist beim Einströmen des kalten Fluids eine Temperatur des Fluids von annähernd 453,15 K (180 °C) und beim Ausströmen des warmen Fluids eine Temperatur des Fluids von annähernd 873,15 K (600 °C).

Durch die Anordnung der ersten Öffnung in der Nähe des Bodens und der zweiten Öffnung in der Nähe der Decke ergibt sich ein vorteilhafter Strömungsverlauf des Fluids durch den Behälter, der beim Entladen des Wärmespeichers vom Boden des Behälters zur Decke des Behälters verläuft. Durch den ersten Teilbereich wird hierbei das durch die erste Öffnung einströmende Fluid derart innerhalb des Behälters verteilt, dass ein annähernd vertikaler Strömungsverlauf des Fluids innerhalb des zweiten Teilbereiches erreicht wird. Dadurch wird eine annähernd homogene horizontale Temperaturverteilung beziehungsweise eine annähernd horizontale Temperaturfront erreicht.

Beim Beladen des Speichers wird das Fluid durch die zweite Öffnung eingeströmt und durch die erste Öffnung ausgeströmt.

Es ergeben sich zudem zum bereits genannten erfindungsgemäßen Wärmespeicher gleichartige und gleichwertige Vorteile des erfindungsgemäßen Verfahrens.

Gemäß einer vorteilhaften Ausgestaltung der Erfindung wird das Wärmespeichermaterial aus einer Mehrzahl von steinartigen Elementen gebildet.

Besonders bevorzugt ist hierbei ein Wärmespeichermaterial, das Steine, Ziegelsteine und/oder ein keramisches Material umfasst.

Das ist deshalb von Vorteil, da Steine, Ziegelsteine und/oder keramische Materialien eine besonders hohe Wärmekapazität aufweisen, so dass ein besonders effizienter Wärmespeicher unter Verwendung der genannten Wärmespeichermaterialien ausgebildet wird.

Bevorzugt ist ein Wärmespeicher, dessen vertikale Ausdehnung senkrecht zu seiner Längsachse höchstens 10 m beträgt.

Mit anderen Worten bildet der Wärmespeicher einen horizontalen Wärmespeicher aus. Ein horizontaler Wärmespeicher besitzt gegenüber einem vertikalen Wärmespeicher den Vorteil, dass die geometrische Ausdehnung entlang der Längsachse, die beim vertikalen Speicher der Höhe des Speichers entspricht, im Wesentlichen keiner Einschränkung unterliegt. Zudem sind horizontale Wärmespeicher technisch weniger aufwendig als vertikale Wärmespeicher. Hierbei bezeichnet die Längsachse jene Achse des Wärmespeichers, die der Richtung seiner größten geometrischen Ausdehnung entspricht.

Gemäß einer vorteilhaften Ausgestaltung der Erfindung ist zwischen dem im ersten und dem im zweiten Teilbereich angeordneten Wärmespeichermaterial wenigstens eine fluiddurchlässige Verteilerplatte angeordnet.

Vorteilhafterweise wird das im ersten Teilbereich des Behälters eingeströmte Fluid mittels der fluiddurchlässigen Verteilerplatte im Wärmespeichermaterial annähernd gleichmäßig und horizontal verteilt. Hierbei erfolgt der Übergang des Fluids vom ersten Teilbereich in den zweiten Teilbereich über die fluiddurchlässige Verteilerplatte. Dadurch wird die horizontale Temperaturfront innerhalb des Behälters weiter verbessert.

Bevorzugt ist hierbei eine Verteilerplatte, die einen hitzebeständigen Stahl umfasst.

Dadurch ist zweckmäßigerweise gewährleistet, dass die Verteilerplatte erforderliche thermische Anforderungen, die sich durch die Anordnung der Verteilerplatte innerhalb des Behälters ergeben, erfüllt.

Von besonderem Vorteil ist eine Verteilerplatte, die ein Vlies umfasst.

Durch die Ausgestaltung der Verteilerplatte als Vlies wird vorteilhafterweise das Fluid innerhalb des Behälters annähernd gleichmäßig im Wärmespeichermaterial verteilt. Ein weiterer Vorteil des Vlieses ist, dass das Vlies sich der Formung und Gestaltung des Wärmespeichermaterials anpasst und folglich einer Verformung des Wärmespeichermaterials, beispielsweise durch eine thermische Belastung, folgen kann. Es ist somit nicht erforderlich, dass die Verteilerplatte eine tragende Funktion besitzt. Insbesondere ist eine dünne Ausgestaltung der Verteilerplatte vorgesehen.

Gemäß einer zweckmäßigen Ausgestaltung der Erfindung weist eine erste Seite des Behälters die erste Öffnung und eine der ersten Seite gegenüberliegende zweite Seite des Behälters die zweite Öffnung auf.

Vorteilhafterweise wird dadurch annähernd der gesamte Wärmespeicher vom Fluid durchströmt. Hierdurch wird die Effizienz des Wärmespeichers verbessert.

Erfindungsgemäß umfasst der Wärmespeicher eine dritte und vierte Öffnung, wobei die dritte Öffnung im ersten Teilbereich und die vierte Öffnung im zweiten Teilbereich angeordnet ist.

Hierbei ist bevorzugt die dritte Öffnung an der zweiten Seite des Behälters und die vierte Öffnung an der ersten Seite des Behälters angeordnet. Dadurch sind die zweite Öffnung und die dritte Öffnung des Behälters an der gleichen Seite, der zweiten Seite, des Behälters angeordnet. Die erste und vierte Öffnung sind an der ersten Seite des Behälters angeordnet. Dadurch wird der Strömungsverlauf des Fluids innerhalb des Behälters weiter verbessert. Insbesondere wird die dritte Öffnung gemäß der ersten Öffnung und die vierte Öffnung gemäß der zweiten Öffnung verwendet.

Mit anderen Worten wird der Wärmespeicher beladen, indem das Fluid durch die zweite und die vierte Öffnung eingeströmt und durch die erste und dritte Öffnung ausgeströmt wird. Ein Entladen des Wärmespeichers erfolgt mittels der Einströmung des Fluids durch die erste und dritte Öffnung und eine Ausströmung des Fluids durch die zweite und vierte Öffnung.

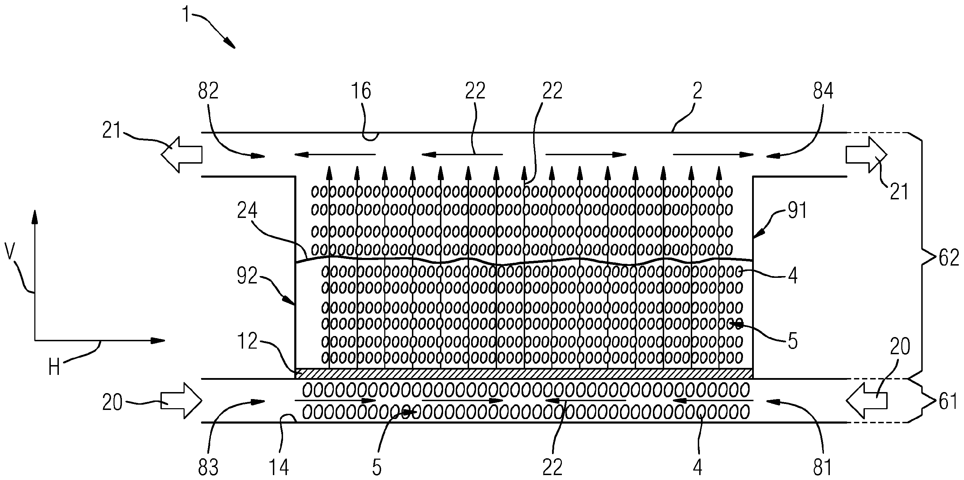

Weitere Vorteile, Merkmale und Einzelheiten der Erfindung ergeben sich aus dem im Folgenden beschriebenen Ausführungsbeispiel sowie anhand der Zeichnung. Dabei zeigt die einzige Figur einen Wärmespeicher mit einer zwischen einem ersten und einem zweiten Teilbereich angeordneten sich horizontal erstreckenden Verteilerplatte.

Gleichartige Elemente können in der Figur mit denselben Bezugszeichen versehen sein.

Die einzige Figur zeigt einen Wärmespeicher 1, der einen Behälter 2 mit einer ersten Öffnung 81, einer zweiten Öffnung 82, einer dritten Öffnung 83 und einer vierten Öffnung 84 umfasst. Hierbei ist die erste Öffnung 81 und die vierte Öffnung 84 an einer ersten Seite 91 des Behälters 2 vorgesehen. Die zweite Öffnung 82 und dritte Öffnung 83 sind an einer zweiten Seite 92 des Behälters 2 angeordnet. Die zweite Öffnung 82 und die vierte Öffnung 84 befinden sich bezüglich einer vertikalen Richtung V in der Nähe einer Decke 16 des Behälters 2. Durch die Anordnung der zweiten und vierten Öffnung 82, 84 in der Nähe der Decke 16 ist der vertikale Abstand der zweiten und vierten Öffnung 82, 84 zur Decke 16 kleiner als der vertikale Abstand der zweiten und vierten Öffnung 82, 84 zu einem Boden 14 des Behälters 2. Die erste und dritte Öffnung 81, 83 sind dagegen in der Nähe des Bodens 14 des Behälters 2 angeordnet.

Die Begriffe horizontal und vertikal beziehen sich stets auf eine an dem Ort des Wärmespeichers 1 vorherrschende Schwerkraft (Lotrichtung).

Der Behälter 2 erstreckt sich entlang einer Längsachse, wobei die Längsachse im Wesentlichen parallel zu einer horizontalen Richtung H (senkrecht zur Lotrichtung) verläuft. Dadurch ist der Wärmespeicher 1 als horizontaler Wärmespeicher 1 ausgebildet.

In der einzigen Figur ist das Entladen des Wärmespeichers 1 mittels der Strömungsrichtungen 20, 21, 22 dargestellt. Beim Entladen des Wärmespeichers 1 drehen sich die dargestellten Strömungsrichtungen 20, 21, 22 um. Jedoch bleibt der erfindungsgemäße Vorteil der verbesserten Verteilung des Fluids innerhalb des Behälters 2 und einer hieraus resultierenden horizontalen Temperaturfront 24 beim Beladen bestehen.

Innerhalb eines ersten Teilbereiches 61 des Behälters 2 ist ein Wärmespeichermaterial 5 angeordnet, das aus einer Mehrzahl von steinartigen Elementen 4, insbesondere aus Steinen 4, gebildet ist. Ferner ist in einem zweiten Teilbereich 62 des Behälters 2 ein weiteres Wärmespeichermaterial 5 angeordnet. Hierbei weisen die steinartigen Elemente 4 des Wärmespeichermaterials 5 im zweiten Teilbereich 62 einen kleineren mittleren Durchmesser als die steinartigen Elemente 4 im ersten Teilbereich 61 auf. Zwischen dem ersten Teilbereich 61 und dem zweiten Teilbereich 62 ist eine sich horizontal erstreckende Verteilerplatte 12 angeordnet. Hierbei dient die Verteilerplatte 12 zur weiteren horizontalen Verteilung des Fluids, so dass sich eine annähernd horizontal sich erstreckende Temperaturfront 24 ergibt.

Im dargestellten Fall des Entladens des Wärmespeichers 1 wird mittels der ersten und dritten Öffnung 81, 83 kaltes Fluid in den ersten Teilbereich 61 des Behälters 2 eingeströmt. Hierbei ist die Einströmungsrichtung des Fluids mit den Pfeilen 20 und die Strömungsrichtung innerhalb des Behälters 2 mit den Pfeilen 22 gekennzeichnet.

Beim Entladen des Wärmespeichers 1 weist das mittels der ersten und dritten Öffnung 81, 83 einströmende kalte Fluid eine kleinere Temperatur als das im ersten und/oder zweiten Teilbereich 61, 62 angeordnete Wärmespeichermaterial 5 auf. Durch den erfindungsgemäßen vergrößerten mittleren Durchmesser der im ersten Teilbereich 61 angeordneten steinartigen Elemente 4 wird das einströmende Fluid annähernd gleichmäßig horizontal über die horizontale Ausdehnung des Behälters 2 verteilt, ohne dass zu hohe Druckverluste entstehen. Anschließend strömt das Fluid über die Verteilerplatte 12 in den zweiten Teilbereich 62 des Behälters 2 ein. Hierbei verteilt die Verteilerplatte 12 das einströmende Fluid zusätzlich horizontal entlang des Behälters 2. Hieraus resultiert die annähernd horizontal verlaufende Temperaturfront 24.

Insgesamt ergibt sich durch die gegeneinander vertikal versetzte erste und zweite Öffnung 81, 82 und durch die verschiedenen mittleren Durchmesser der steinartigen Elemente 4 im ersten und zweiten Teilbereich 61, 62 ein horizontaler Wärmespeicher 1, der, wie ein vertikaler Wärmespeicher, eine horizontale Temperaturfront 24 aufweist. Der erfindungsgemäße Wärmespeicher 1 kombiniert daher synergetisch die Vorteile eines horizontalen Wärmespeichers mit den Vorteilen eines vertikalen Wärmespeichers.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

## Patentansprüche

1. Wärmespeicher (1) zur Speicherung thermischer Energie, umfassend einen Behälter (2) wobei der Behälter (2) ein aus einer Mehrzahl von steinartigen Elementen (4) gebildetes Wärmespeichermaterial (5) umfasst, wobei der Behälter (2) in einem ersten Teilbereich (61) eine erste Öffnung (81) und in einem zweiten Teilbereich (62) eine gegenüber der ersten Öffnung (61) vertikal versetzte zweite Öffnung (82) aufweist, wobei ein mittlerer Durchmesser der im ersten Teilbereich (61) angeordneten steinartigen Elemente (4) größer als ein mittlerer Durchmesser der im zweiten Teilbereich (62) angeordneten steinartigen Elemente (4) ist, **dadurch gekennzeichnet, dass** der Behälter eine sich horizontal erstreckende Längsachse aufweist, und dass der Wärmespeicher (1) eine dritte und vierte Öffnung (83, 84) aufweist, und die dritte Öffnung (83) im ersten Teilbereich (61) und die vierte Öffnung (84) im zweiten Teilbereich (62) angeordnet ist.

2. Wärmespeicher (1) gemäß Anspruch 1, **dadurch gekennzeichnet, dass** das Wärmespeichermaterial (5) Steine, Ziegelsteine und/oder ein keramisches Material umfasst.

3. Wärmespeicher (1) gemäß Anspruch 1 oder 2, **dadurch gekennzeichnet, dass** eine vertikale Ausdehnung des Wärmespeichers (1) senkrecht zur Längsachse höchstens 10 m ist.

4. Wärmespeicher (1) gemäß einem der vorangegangenen Ansprüche, **dadurch gekennzeichnet, dass** zwischen dem im ersten und dem im zweiten Teilbereich (61, 62) angeordneten Wärmespeichermaterial (5) wenigstens eine fluiddurchlässige Verteilerplatte (12) angeordnet ist.

5. Wärmespeicher (1) gemäß Anspruch 4, **dadurch gekennzeichnet, dass** die Verteilerplatte (12) einen hitzebeständigen Stahl umfasst.

6. Wärmespeicher (1) gemäß Anspruch 4 oder 5, **dadurch gekennzeichnet, dass** die Verteilerplatte (12) ein Vlies umfasst.

7. Wärmespeicher (1) gemäß einem der Ansprüche 4 bis 6, **dadurch gekennzeichnet, dass** die Verteilerplatte (12) ein Drahtgitter umfasst.

8. Wärmespeicher (1) gemäß einem der vorangegangenen Ansprüche, **dadurch gekennzeichnet, dass** eine erste Seite (91) des Behälters (2) die erste Öffnung (81) und eine der ersten Seite (91) gegenüberliegende zweite Seite (92) des Behälters (2) die zweite Öffnung (82) aufweist.

9. Wärmespeicher (1) gemäß einem der vorangegangenen Ansprüche, **dadurch gekennzeichnet, dass** die erste Seite (91) die vierte Öffnung (84) und die zweite Seite (92) die dritte Öffnung (83) umfasst.

10. Verfahren zum Betrieb eines Wärmespeichers (1) gemäß einem der vorangegangenen Ansprüche, bei dem ein Fluid mittels der ersten oder zweiten Öffnung (81, 82) in den Behälter (2) des Wärmespeichers (1) eingeströmt und in thermischen Kontakt mit dem Wärmespeichermaterial (5) gebracht wird, und zum Entladen des Wärmespeichers (1) das Fluid durch die erste Öffnung (81) eingeströmt und durch die zweite Öffnung (82) ausgeströmt wird und/oder zum Beladen des Wärmespeichers (1) das Fluid durch die zweite Öffnung (82) eingeströmt und durch die erste Öffnung (81) ausgeströmt wird.

11. Verfahren gemäß Anspruch 10 zum Betrieb eines Wärmespeichers (1) gemäß einem der Ansprüche 1 bis 9, **dadurch gekennzeichnet, dass** zum Entladen des Wärmespeichers (1) das Fluid zusätzlich durch die dritte Öffnung (83) eingeströmt und durch die vierte Öffnung (84) ausgeströmt wird.

12. Verfahren gemäß Anspruch 10 oder 11 zum Betrieb eines Wärmespeichers (1) gemäß einem der Ansprüche 1 bis 9, **dadurch gekennzeichnet, dass** zum Beladen des Wärmespeichers (1) das Fluid zusätzlich durch die vierte Öffnung (84) eingeströmt und durch die dritte Öffnung (83) ausgeströmt wird.

## Claims

1. Heat store (1) for storing thermal energy, comprising a container (2), wherein the container (2) comprises a heat store material (5) formed from a plurality of stone-like elements (4), wherein the container (2) has a first opening (81) in a first partial region (61) and, in a second partial region (62), a second opening (82) offset vertically with respect to the first opening (61), wherein a mean diameter of the stone-like elements (4) arranged in the first partial region (61) is greater than a mean diameter of the stone-like elements (4) arranged in the second partial region (62), **characterized in that** the container has a horizontally extending longitudinal axis, and **in that** the heat store (1) has a third and a fourth opening (83, 84), and the third opening (83) is arranged in the first partial region (61) and the fourth opening (84) is arranged in the second partial region (62).

2. Heat store (1) according to Claim 1, **characterized in that** the heat store material (5) comprises stones, bricks and/or a ceramic material.

3. Heat store (1) according to Claim 1 or 2, **characterized in that** a vertical extent of the heat store (1) perpendicular to the longitudinal axis is at most 10 m.

4. Heat store (1) according to one of the preceding claims, **characterized in that** at least one fluid-permeable distributor plate (12) is arranged between the heat store material (5) arranged in the first partial region (61) and the heat store material (5) arranged in the second partial region (62).

5. Heat store (1) according to Claim 4, **characterized in that** the distributor plate (12) comprises a heat-resistant steel.

6. Heat store (1) according to Claim 4 or 5, **characterized in that** the distributor plate (12) comprises a nonwoven.

7. Heat store (1) according to one of Claims 4 to 6, **characterized in that** the distributor plate (12) comprises a wire grid.

8. Heat store (1) according to one of the preceding claims, **characterized in that** a first side (91) of the container (2) has the first opening (81) and a second side (92) of the container (2) lying opposite the first side (91) has the second opening (82).

9. Heat store (1) according to one of the preceding claims, **characterized in that** the first side (91) comprises the fourth opening (84) and the second side (92) comprises the third opening (83).

10. Method for operating a heat store (1) according to one of the preceding claims, in which a fluid is made to flow into the container (2) of the heat store (1) by means of the first or second opening (81, 82) and is brought into thermal contact with the heat store material (5), and the heat store (1) is discharged by making the fluid flow in through the first opening (81) and flow out through the second opening (82) and/or the heat store (1) is charged by making the fluid flow in through the second opening (82) and flow out through the first opening (81).

11. Method according to Claim 10 for operating a heat store (1) according to one of Claims 1 to 9, **characterized in that** the heat store (1) is discharged by additionally making the fluid flow in through the third opening (83) and flow out through the fourth opening (84).

12. Method according to Claim 10 or 11 for operating a heat store (1) according to one of Claims 1 to 9, **characterized in that** the heat store (1) is charged by additionally making the fluid flow in through the fourth opening (84) and flow out through the third opening (83).

## Revendications

1. Accumulateur (1) de chaleur pour accumuler de l'énergie thermique, comprenant un récipient (2), le récipient (2) comprenant un matériau (5) d'accumulateur de chaleur, formé d'une pluralité d'éléments (4) de type roche, le récipient (2) ayant, dans une première sous-région (61), une première ouverture (81), et dans une deuxième sous-région (62), une deuxième ouverture (82), décalée verticalement par rapport à la première ouverture (61), dans lequel un diamètre moyen des éléments (4) de type roche, disposés dans la première sous-région (61), est plus grand qu'un diamètre moyen des éléments (4) de type roche disposés dans la deuxième sous-région (62), **caractérisé en ce que** le récipient a un axe longitudinal s'étendant horizontalement et **en ce que** l'accumulateur (1) de chaleur a une troisième et une quatrième ouvertures (83, 84) et la troisième ouverture (83) est disposée dans la première sous-région (61) et la quatrième ouverture (84) dans la deuxième sous-région (62).

2. Accumulateur (1) de chaleur suivant la revendication 1, **caractérisé en ce que** le matériau (5) de l'accumulateur de chaleur comprend des roches, des briques et/ou un matériau céramique.

3. Accumulateur (1) de chaleur suivant la revendication 1 ou 2, **caractérisé en ce qu'**une étendue verticale de l'accumulateur (1) de chaleur, perpendiculairement à l'axe longitudinal, est au plus de 10 m.

4. Accumulateur (1) de chaleur suivant l'une des revendications précédentes, **caractérisé en ce qu'**au moins une plaque (12) formant répartiteur, perméable au fluide, est disposée entre le matériau (5) d'accumulateur de chaleur, disposé dans la première sous-région (61) et celui disposé dans la deuxième sous-région (62).

5. Accumulateur (1) de chaleur suivant la revendication 4, **caractérisé en ce que** la plaque (12) formant répartiteur comprend de l'acier réfractaire.

6. Accumulateur (1) de chaleur suivant la revendication 4 ou 5, **caractérisé en ce que** la plaque (12) formant répartiteur comprend un non-tissé.

7. Accumulateur (1) de chaleur suivant l'une des revendications 4 à 6, **caractérisé en ce que** la plaque (12) formant répartiteur comprend un grillage métallique.

8. Accumulateur (1) de chaleur suivant l'une des revendications précédentes, **caractérisé en ce qu'**un premier côté (91) du récipient (2) a la première ouverture (81) et un deuxième côté (92), opposé au premier côté (91) du récipient (2), a la deuxième ouverture (82).

9. Accumulateur (1) de chaleur suivant l'une des revendications précédentes, **caractérisé en ce que** le premier côté (91) comprend la quatrième ouverture (84) et le deuxième côté (92) la troisième ouverture (83).

10. Procédé pour faire fonctionner un accumulateur (1) de chaleur suivant l'une des revendications précédentes, dans lequel on envoie un fluide au moyen de la première ou de la deuxième ouverture (81, 82) dans le récipient (2) de l'accumulateur (1) de chaleur et on le met en contact thermique avec le matériau (5) de l'accumulateur de chaleur, et, pour décharger l'accumulateur (1) de chaleur, on fait entrer le fluide par la première ouverture (81) et on le fait sortir par la deuxième ouverture (82) et/ou, pour charger l'accumulateur (1) de chaleur, on fait entrer le fluide par la deuxième ouverture (82) et on le fait sortir par la première ouverture (81).

11. Procédé suivant la revendication 10 pour faire fonctionner un accumulateur (1) de chaleur suivant l'une des revendications 1 à 9, **caractérisé en ce que**, pour décharger l'accumulateur (1) de chaleur, on fait entrer le fluide supplémentairement par la troisième ouverture (83) et on le fait sortir par la quatrième ouverture (84).

12. Procédé suivant la revendication 10 ou 11 pour faire fonctionner un accumulateur (1) de chaleur suivant l'une des revendications 1 à 9, **caractérisé en ce que**, pour charger l'accumulateur (1) de chaleur, on fait entrer le fluide supplémentairement par la quatrième ouverture (84) et on le fait sortir par la troisième ouverture (83).
